# EUROPEAN PATENT APPLICATION

(11) **EP 0 703 113 A2**
(43) Date of publication of application: **27.03.1996**
(21) Application number: 95305505.0
(22) Date of filing: 08.08.1995
(51) Int. Cl.: B60N 2/28

(54) **Child safety seat for vehicles**

(30) Priority: 25.08.1994 GB 9417161; 10.11.1994 GB 9422690
(71) Applicant: BRITAX RÖMER Kindersicherheit GmbH, D-89024 Ulm (DE); BRITAX-EXCELSIOR LIMITED, Andover, Hampshire SP10 3UW (GB)
(72) Inventor: Burleigh, David William, Bognor Regis, West Sussex PO21 4XN (GB); Barley, Geoffrey Wilfred, Pitton, Salisbury, Wiltshire SP5 1DQ (GB); Wetter, Hermann, D-89075 Ulm (DE)
(74) Representative: Hollinghurst, Antony

(57) **Abstract**

A child safety seat, for use in a vehicle, has a seat body (30), rear releasable connectors (34, 134) for rigid engagement with rear standard anchorage units on the vehicle, and front releasable connectors (36, 136) for rigid engagement with front standard anchorage units on the vehicle. The rear releasable connectors (134) are linked to the front releasable connectors (36, 136) by a coupling mechanism (52, 88, 92) which inhibits engagement of the front releasable connectors (36, 136) when the rear releasable connectors (134) are in their released position. The front releasable connectors (136) are mounted on retractable front legs (138) for movement between a deployed position and a stowed position, and blocking means (160) operate to inhibit engagement of the rear releasable connectors (134) when the front legs (138) are stowed.

## Description

This invention relates to a child safety seat, for use in a vehicle, comprising a seat body, a rear releasable connector rigidly secured to the seat body and adapted for rigid engagement with a rear standard anchorage unit on said vehicle, and a front releasable connector rigidly secured to the seat body and adapted for rigid engagement with a front standard anchorage unit on said vehicle.

It is well known to use an adult seat belt to secure a child seat to a vehicle seat. The disadvantage of this arrangement is that, even if the adult belt is pulled very tight during installation, the resilience of both the vehicle seat and the adult belt will permit undesirable movement of the child seat relative to the vehicle in the event of sudden deceleration, for example, during an accident. In order to overcome this disadvantage, it has been proposed to provide motor cars with standard anchorage units at agreed locations both in front of the seat and at the bottom of the backrest. In use, these anchorage units are engaged by releasable connectors which are rigidly coupled to a child seat. Such anchorage units are herein referred to as "standard anchorage units", the anchorage units in front of the seat being called "front standard anchorage units" and the anchorage units at the bottom of the backrest being called "rear standard anchorage units".

According to one aspect of the invention, in a child safety seat of the type described above, the rear releasable connector is linked to the front releasable connector by coupling means adapted to inhibit movement of the front releasable connector into its engaged position when the rear releasable connector is in its released position.

Preferably the coupling means is so arranged that release of the front releasable connector causes release of the rear releasable connector.

According to another aspect of the invention, in a child safety seat of the type described above, the front releasable connector is mounted on retractable front mounting means for movement between a deployed position and a stowed position, and blocking means operate to inhibit engagement of the rear releasable connector when the front mounting means is in the stowed position.

Preferably, further blocking means is arranged to inhibit engagement of the front releasable connector prior to engagement of the rear releasable connector.

The rear releasable connector may also be mounted on retractable rear mounting means for movement between a deployed position and a stowed position, and blocking means operate to inhibit deployment of the front mounting means when the rear mounting means is in the stowed position.

Embodiments of the invention will now be described, by way of example, with reference to the accompanying drawings, in which:
Figure 1 is a perspective view of a vehicle seat equipped with standard anchorage units of the type described above;
Figure 2 is a side view, showing a child safety seat in accordance with the invention, fitted to the vehicle seat of Figure 1 which is shown in section;
Figure 3 is a longitudinal sectional view of a rear releasable connector for the seat shown in Figure 2, in its released position;
Figure 4 is a longitudinal sectional view of a front releasable connector for the seat shown in Figure 2 in its released position;
Figures 5 and 6 are sectional views corresponding to Figures 3 and 4 but showing the releasable connectors in their engaged positions;
Figure 7 is a sectional view corresponding to Figure 4 but showing the front releasable connector in a released position prior to disengagement of the rear connector;
Figure 8 is a sectional view corresponding to Figure 7 but showing the front releasable connector in a released position after disengagement of the rear connector.
Figure 9 is a partially broken-away side view of a second version of the child safety seat shown in Figure 2, with the attachment means for securing it to the standard anchorage units stowed;
Figure 10 is a cross-sectional view taken on line 9 - 9 in Figure 9;
Figure 11 is an enlarged sectional view of part of the mechanism shown in Figure 9;
Figure 12 is a side view, similar to Figure 9, but with the attachment means partly deployed;
Figure 13 is a cross-sectional taken on the line 13 - 13 in Figure 12;
Figure 14 is an enlarged sectional view showing the attachment means of the seat shown in Figure 6 about to be secured to a rear standard anchorage unit;
Figure 15 is a schematic sectional view, similar to Figure 8, but showing the attachment means secured to the rear standard anchorage unit;
Figure 16 is a schematic cross-sectional view, similar to Figures 9 and 12, with the seat secured to both front and rear standard anchorages;
Figure 17 is a schematic cross-sectional view on an enlarged scale of the part of the mechanism shown in Figure 10;
Figure 18 is a schematic sectional view, similar to Figure 16, of a third version of the child safety seat shown in Figure 2, with the seat secured to both front and rear standard anchorages; and
Figure 19 is a partially broken-away side view of the lower front part of the seat shown in Figure 18 with the attachment means for securing it to the standard anchorage units stowed.

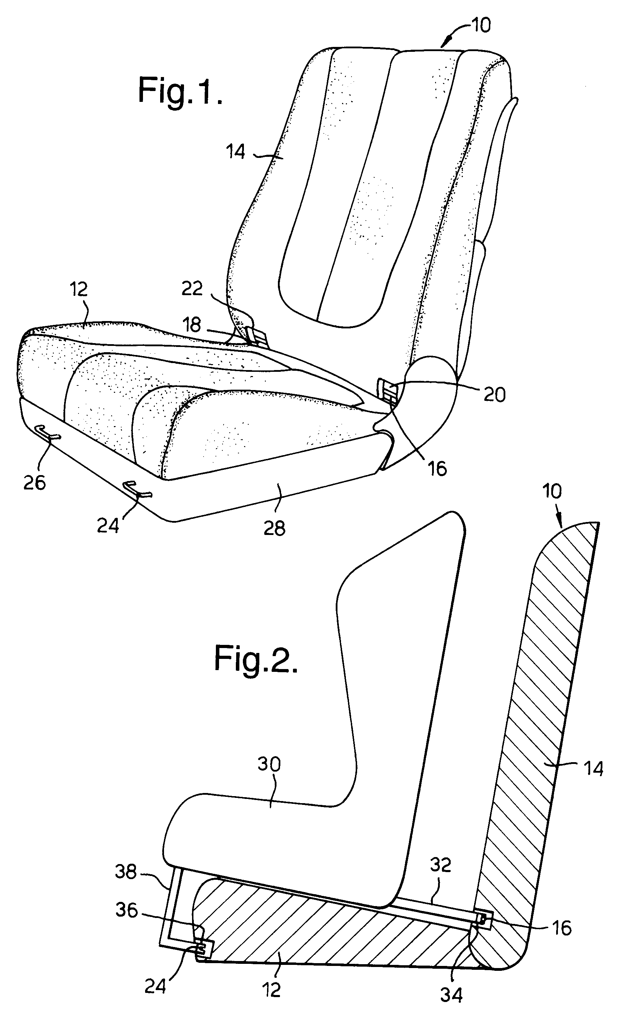

Figure 1 shows a vehicle seat 10 equipped with two front standard anchorage units and two rear standard anchorage units of the type described above. The seat comprises a seat portion 12 and a backrest 14. The rear standard anchorage units comprise transversely extending rods 16 and 18 which are accessible through openings 20 and 22 in the bottom of the backrest and which are rigidly secured to the frame (not shown) of the seat 10. The front standard anchorage units comprise U-shaped rods 24 and 26 which have the ends of their limbs secured to the front edge of a base portion 28 of the seat portion 12.

Referring to Figure 2, a child safety seat suitable for mounting on the vehicle seat 10 shown in Figure 1, has a seat body 30 with an L-shaped support member 32 projecting therethrough close to the left hand side thereof. A releasable connector 34 is mounted on the rear end of the long limb of the support member 32 for engagement with the rear standard anchorage units on the left hand side of the seat 10. A similar releasable connector 36 is mounted on the end of the short limb of the support member 32 for engagement with the corresponding front standard anchorage unit 24.

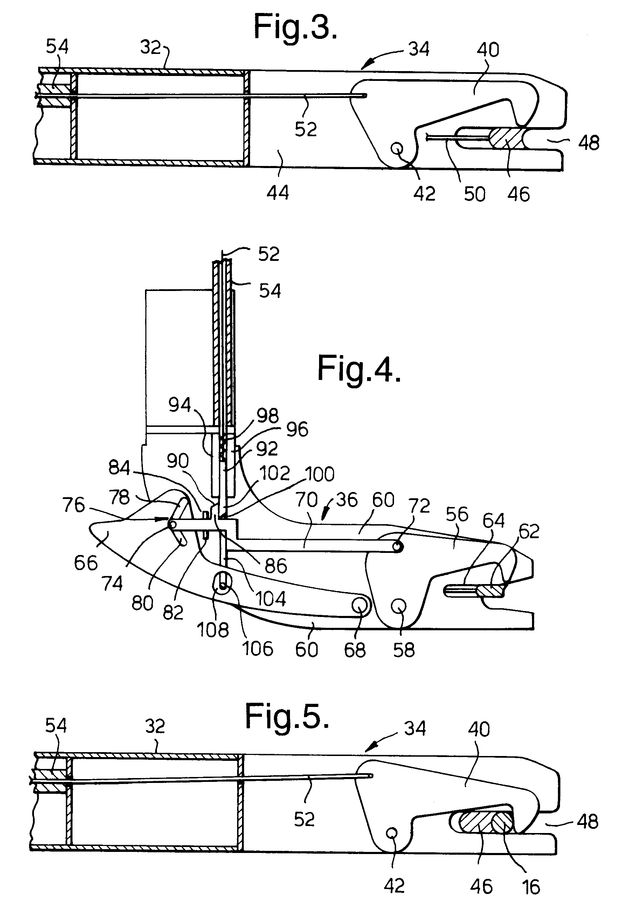

As can be seen from Figure 3, the rear releasable connector 34 is as described in EP-A-0619201. It has a latch member 40 mounted fast with a shaft 42, which is journaled in a pair of mutually parallel side walls 44 (only one of which is shown in Figure 3). An ejector 46 is slidably mounted in slots 48 in the side walls 44 and is coupled by a rod 50 to a compression spring (not shown) for biassing the ejector rearwardly (to the right as viewed in Figure 3). The latch 40 is biassed by a spring (not shown) into its engaged position. When the connector is in its released condition, as shown in Figure 3, the ejector 46 engages under the latch 40 to hold it in its disengaged position. The latch 40 is connected to the central wire 52 of a Bowden cable 54 which extends forwardly to the front releasable connector 36.

As shown in Figure 4, the front releasable connector 36 is generally similar to the corresponding rear releasable connector 34 in that it has a latch member 56 which is pivotally mounted on a pivot pin 58 extending between mutually parallel side walls 60 (only one of which is shown in Figure 4). The latch member 56 is biassed by a spring (not shown) towards its engaged position and, in its released position, rests on an ejector 62 which is mounted in slots 64 in the side walls 60 and is biassed rearwardly by a compression spring (not shown).

A manually operable release lever 66 is mounted between the side walls 60 on a pivot pin 68 and biased in a clockwise direction (as viewed in Figure 4) by a spring (not shown). A link 70 has one end pivotally coupled by a pin 72 to the latch member 56. The other end of the link 70 carries a guide pin 74 which engages in a slot 76 formed in the release lever 66. The slot 76 has an upper arcuate part 78 centred on the pivot pin 68 of the lever 66, and an inclined lower part 80. Guides 82 and 84 are fixed to the side walls 60 and prevent vertical movement of the end of the link 70 which carries the guide pin 74, holding it at the junction between the two parts 78 and 80 of the slot 76.

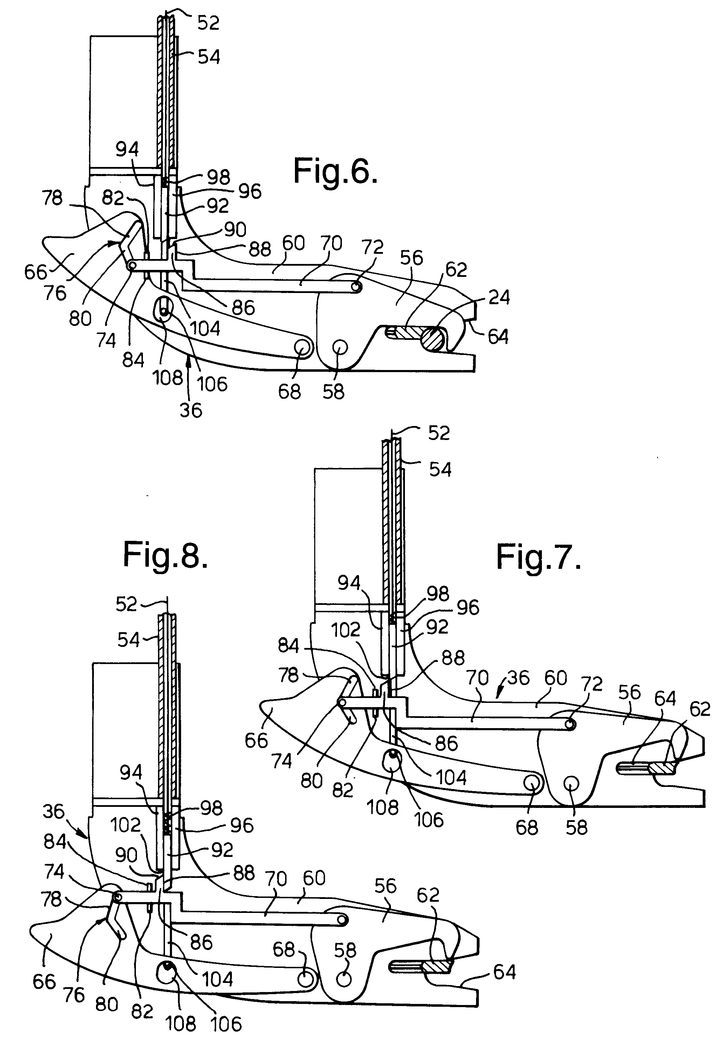

The link 70 carries an upwardly extending projection 86 having a rearwardly facing vertical detent face 88 (see Figure 6) and a forwardly inclined cam face 90.

The front end of the central wire 52 of the Bowden cable 54 is connected to a slider 92 mounted between vertical slide guides 94 and 96 and having a compression spring 98 which is relatively weak and arranged to maintain tension in the wire 52 while being insufficient to overcome the force exerted by the spring biassing the latch member 40 of the rear connector 34 into its engaged position. The slider 92 has a rearwardly directed inclined cam face 100 and a forwardly directed detent face 102.

When the rear releasable connector 34 is in its released position, the spring 98 biasses the slider downwardly so that its detent face 100 engages with the detent face 90 of the link 70 so as to hold the latch member 56 in its released position regardless of the position of the ejector 62.

The slider 92 has a projection 104 which extends downwardly below the cam face 90 thereof to one side of the link 70. On its bottom end, the projection 104 has a guide pin 106 which projects through an opening 108 in the release lever 66.

When the child seat is to be fitted to the standard anchorage units of the vehicle seat 10, the rear releasable connector 34 is positioned so that the rod 16 of the left hand rear standard anchorage unit is received in the slot 48, thus displacing the ejector 46 forwardly. When the rod 16 has cleared the end of the latch member 40, the latter is moved by its spring to the position shown in Figure 5, pulling the central wire 52 of the Bowden cable 54 rearwardly so as to raise the slider 92 to a position in which its detent face 102 is disengaged from the detent face 88 on the link 70. The pin 106 moves to the top of the opening 108.

Next, the ejector 62 of the front releasable connector 36 is pushed on to the front standard anchorage unit 24, displacing the ejector 62 clear of the end of the latch member 56 which is then moved into an engaged position by its above-mentioned spring, pulling the link 70 to the right, as shown in Figure 6. This causes the guide pin 74 to move to the bottom of the inclined part 80 of the slot 76 in the release lever 66, the left hand end of which moves upwardly so that the pin 106 returning to the central region of the opening 108. The location of the release lever 66 is in this upper position provides a visual indication that the rear and front latch members 40 and 56 are both in their engaged positions.

When the child seat is to be removed from the vehicle seat 10, the release lever 66 is moved downwards to the position shown in Figure 7, disengaging the latch member 56 from the front anchorage unit 24 and moving the guide pin 106 to the top of the opening 108 in the release lever 66. Further downward movement of the release lever 66, to the position shown in Figure 8, causes the engagement of the guide pin 106 with the top of the opening 108 to pull the slider 92 downwards, so that the Bowden cable 54 pulls the latch member 40 of the rear releasable connector 34 to its disengaged position, as shown in Figure 3. During this movement, the pin 74 on the front end of the link 70 moves along the arcuate part 78 of the slot 76. When downward pressure on the released lever 66 is removed, its above-mentioned spring returns it to the position shown in Figure 4, further clockwise movement being prevented by engagement of the pin 74 with the lower side edge of the inclined part 80 of the slot 76, and of the latch member 56 with its ejector 62.

If for any reason the rear releasable connector 34 gets into its released position before the front releasable connector 36, the cam faces 88 and 102 displace the slider 92 out of the path of the upwardly extending projection 86 on the link 76 as the lever 72 moves the front releasable connector 36 to its released position.

A second support member (not shown), similar to the support member 32, projects through the right hand side of the seat body 30 and carries a slotted plate (similar to the side walls 60 of the front releasable connector 36) for non-latching engagement with the front standard anchorage unit 26 on the right hand side of the vehicle seat 10. The rear end of the second support member carries a second rear releasable connector for engagement with the rear standard anchorage unit 18 on the right hand side of the vehicle seat 10. The second rear releasable connector has a latch member and ejector similar to the latch member 40 and ejector 46. The shaft 42 extends across the rear of the seat and has both latch members secured thereto for simultaneous angular movement. Consequently, the slider 92 of the front releasable connector 36 is raised only when both rear releasable connectors are engaged.

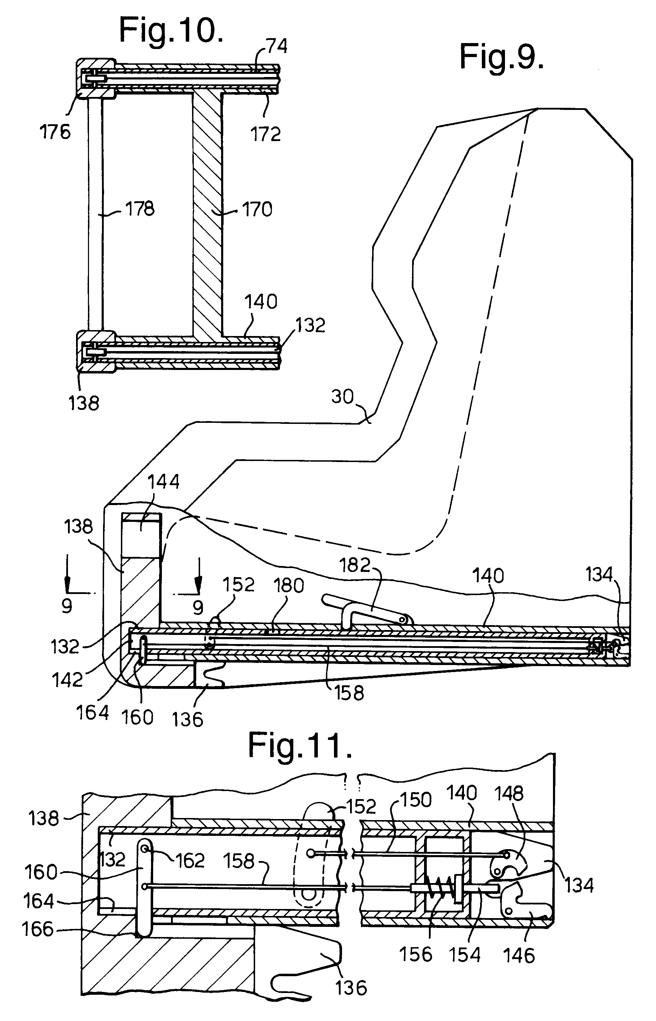

Figures 9, 10 and 11 show a second version of the seat shown in Figure 2, in which the horizontal support member 32 is replaced by a horizontal support member 132, which carries a front releasable connector 136 and is slidably received within a horizontal duct 140 in the base of the seat body 30. A front leg 138 is mounted immediately adjacent to the front end of the duct 140, in guides (not shown) for sliding vertical movement and limited rearward movement, as will be explained hereinafter. In Figure 9, the leg 138 is shown at the highest and furthest forward point of its range of travel, with a lateral opening 142 aligned with the duct 140. The front end of the horizontal support member extends beyond the front end of the duct 140 and into the opening 142 so as to hold the leg 138 in its uppermost position. A rear releasable connector 134 is received within the rear end of the duct 140. The front leg 138 has a second horizontal opening 144 which can be brought into alignment with the horizontal duct 140 when the leg 138 is in its lowest position.

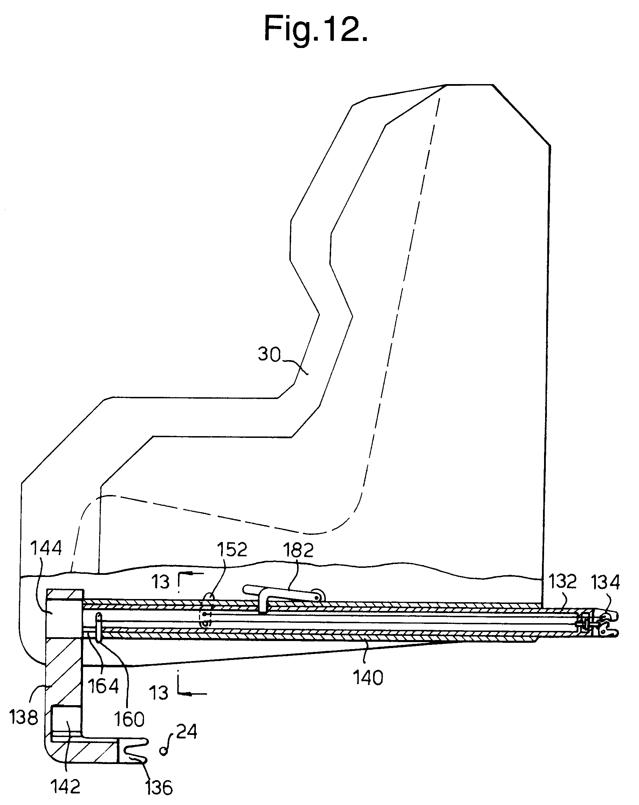

As can best be seen from Figure 11, the rear releasable connector 134 comprises a pivotally mounted latch plate 146 and a pivotally mounted retaining plate 148, both of which are biassed by respective springs in the clockwise direction, as viewed in Figure 11. The retaining plate 148 is connected by a coupling rod 150 to a manually operable release lever 152 which projects upwardly through the top wall of the channel 140. An ejector rod 154, located behind the latch plate 146, is biassed to the right (as viewed in Figure 11) by a compression spring 156 and coupled by a connecting rod 158 to a lever 160 which is mounted at one end on a pivot pin 162 extending between the walls of the support member 132. The other end of the lever 160 projects through a slot 164, where its free end engages with an abutment 166 on the front leg 138 so as to prevent movement of the ejector rod to the left. This has the result of preventing engagement of the releasable connector 134 when the front leg 138 is in its highest position, as shown in Figures 9 to 11.

As can be seen from Figure 10, the duct 140 is connected by a cross member 170 to a second duct 172 on the opposite side of the seat body 30. This contains a second horizontal support member 174 with a releasable connector (not shown) on its rear end for engagement with the right hand rear standard anchorage unit 18 (Figure 1). There is also a second front leg 176, similar to the leg 138, for engagement with the right hand front standard anchorage unit 26. The two front legs 138 and 176 are interconnected by a link member 178.

Referring to Figures 12 to 14, when the child seat is to be fitted to the vehicle seat 10, the two horizontal support members 132 and 174 are pulled rearwardly, disengaging their front ends from the lateral openings 142 in the front legs 138 and 176, thus allowing the latter to be pulled downwards to their deployed position in which each opening 144 is aligned with the front end of the corresponding duct 140, 172. Rearward movement of the horizontal support member 132 also has the effect of moving the lever 160 out of abutment with the front leg 138, thus freeing the ejector 156 to the left, as seen in the drawings. The support member 132 has an opening 180 for engagement by a manually releasable pawl 182 to secure the support member 132 in its rearward position.

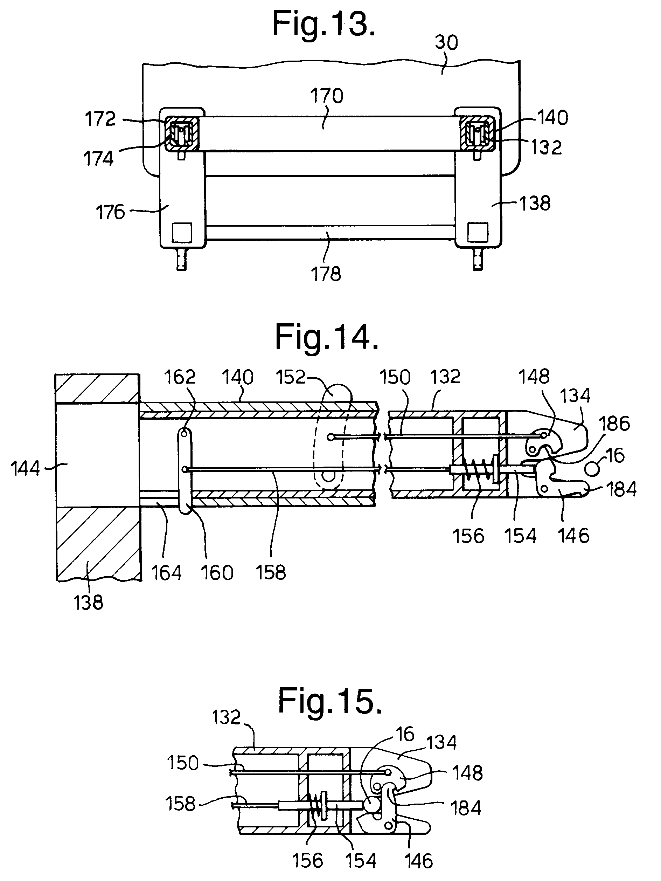

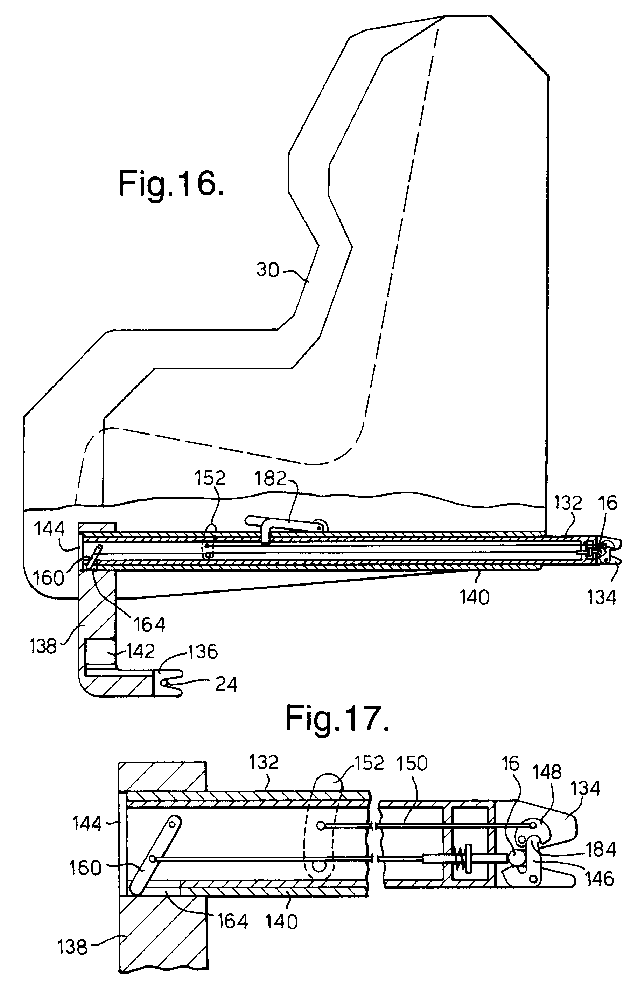

Next, the child seat is positioned so that the releasable connector on the rear end of the support member 132 is aligned with the rear standard anchorage units 16 and the corresponding releasable connector on the rear end of the support member 174 is aligned with the rear standard anchorage unit 18, as shown in Figure 14. The releasable connector 134 is then pushed on to the standard anchorage unit 16 so that the latter displaces the latch plate 146 in the counter-clockwise direction until its long limb 184 engages in a notch 186 in the retaining plate 148, as shown in Figure 15. At the same time, the ejector 154 is displaced to the left, pivoting the lever 160 so that its bottom end is above the bottom of the duct 140. This allows the front leg 138 to slide rearwardly to bring the front releasable connector 136 on the bottom of the leg 138 into engagement with the front standard anchorage unit 24, the end of the duct 140 being received in the horizontal opening 144, as shown in Figures 16 and 17. Similar engagement with the standard anchorage units 18 and 26 on the other side of the child seat body 30 ensure that it is secured in place.

The front releasable connector 136 on the left hand front leg 138 may be similar to the rear releasable connector 134. Since the front legs 138 and 176 are interconnected by the link member 178, it is not necessary to provide a latching connector of this type on the right hand front leg 176 which may merely have a notch to engage above and below the standard anchorage unit 26.

When the child seat is to be removed from the vehicle seat 10, the rear releasable connector 134 is disengaged by pulling forwardly on the upper end of the lever 152 and the other rear releasable connector on the other side of the seat is released in a similar manner. When the front releasable connector 136 has been disengaged, the horizontal support members 132 and 174 and the front legs 138 and 176 can be returned to their stowed positions illustrated in Figures 9 to 11.

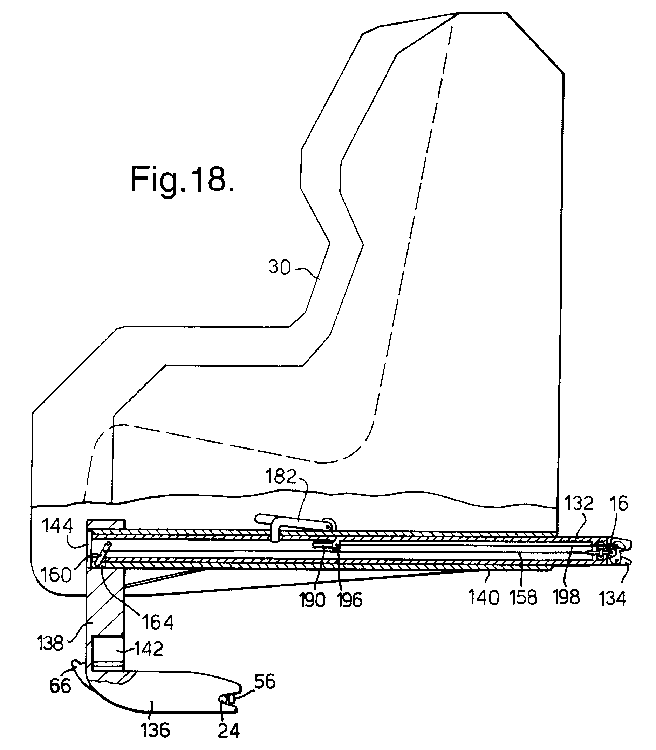

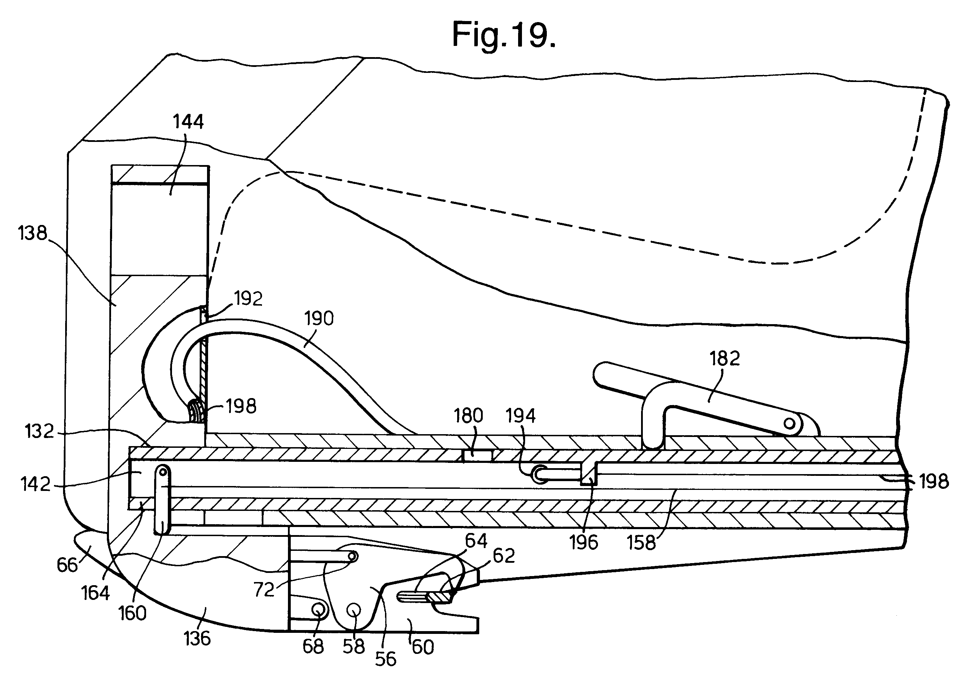

Figures 18 and 19 illustrate a third version of the seat shown in Figure 2, having rear releasable connectors and stowable front legs 138 in accordance with Figures 9 to 16, together with front releasable connectors in accordance with Figures 4 and 6 to 8. However, in place of the Bowden cable 54, each front releasable connector 136 has a Bowden cable 190 which extends through an opening 192 in the rear face of the front leg 138, and then through an opening 194 in the inside wall of the horizontal support member 132 and a slot (not shown) aligned therewith in the adjacent wall of the duct 140, into abutment with a stop 196 inside the horizontal support member 132. The central wire 198 projects through the stop 196 and is coupled to the latch plate 148 (Figure 11) in a similar manner to the coupling rod 150.

If identical front releasable connectors 136 are provided on both front leg 138 and 176, each has the central wire 198 of its Bowden cable 1190 connected to the corresponding rear releasable connector 134 of may be similar to the rear releasable connector 134. If only front leg has a latching front releasable connector 134 and the other has a notch to engage above and below the standard anchorage unit 26, a separate Bowden cable links each rear releasable connector 134 to the single latching front releasable connector.

## Claims

1. A child safety seat, for use in a vehicle, comprising a seat body (30), a rear releasable connector (34, 134) rigidly secured to the seat body (30) and adapted for rigid engagement with a rear standard anchorage unit (16, 18) on said vehicle, and front a releasable connector (36, 136) rigidly secured to the seat body (30) and adapted for rigid engagement with a front standard anchorage unit (24, 26) on said vehicle, characterised in that the rear releasable connector (34, 134) is linked to the front releasable connector (36, 136) by coupling means (52, 88, 92) adapted to inhibit movement of the front releasable connector (36, 136) into its engaged position when the rear releasable connector (34, 134) is in its released position.

2. A child safety seat according to claim 1, wherein the coupling means (52, 88, 92) is operative to cause release of the rear releasable connector (34, 134) in response to release of the front releasable connector (36, 136).

3. A child safety seat according to claim 1 or 2, wherein the front releasable connector (136) is mounted on retractable front mounting means (138, 176) for movement between a deployed position and a stowed position, and blocking means (154, 160) operate to inhibit engagement of the rear releasable connector (134) when the front mounting means (138, 176) is in its stowed position.

4. A child safety seat, for use in a vehicle, comprising a seat body (30), a rear releasable connector (134) rigidly secured to the seat body (30) and adapted for rigid engagement with a rear standard anchorage unit (16, 18) on said motor vehicle, and a front releasable connector (136) rigidly secured to the seat body (30) and adapted for rigid engagement with a front standard anchorage unit (24, 26) on said vehicle, characterised in that the front releasable connector (136) is mounted on retractable front mounting means (138, 176) for movement between a deployed position and a stowed position, and blocking means (154, 160) operate to inhibit engagement of the rear releasable connector (34, 134) when the front mounting means (138, 176) is in its stowed position.

5. A child safety seat according to claim 3 or 4, wherein the rear releasable connector (134) is mounted on retractable rear mounting means (132) for movement between a deployed position and a stowed position, and blocking means (142) operate to inhibit deployment of the front mounting means (138, 176) when the rear mounting means (132) is in its stowed position.

6. A child safety seat according to any preceding claim, in combination with a vehicle, the vehicle having an adult vehicle seat (10) with a seat portion (12) and a backrest portion (14), a front anchorage unit (24, 26) rigidly secured to the vehicle below the front edge of the vehicle seat (10), and a rear anchorage unit (16, 18) rigidly secured to the vehicle at the bottom of the backrest portion (14) of the vehicle seat (10).
